# EUROPÄISCHE PATENTSCHRIFT

(11) **EP 2 022 310 B1**
(45) Veröffentlichungstag und Bekanntmachung des Hinweises auf die Patenterteilung: **26.01.2011**
(21) Anmeldenummer: 08159930.0
(22) Anmeldetag: 08.07.2008
(51) Int. Cl.: A01D 41/12

(54) **Zwischen Breitverteil- und Auswurfkrümmerbetrieb umschaltbare Erntegutresteabgabeanordnung für einen Mähdrescher**
Harvested material release assembly for a combine harvester which can be switched between wide distribution and emission manifold operation
Dispositif de dépôt de résidus de moissons commutable entre fonctionnement de distribution large et collecteur éjecteur pour une moissonneuse-batteuse

(30) Priorität: 08.08.2007 DE 102007037497
(43) Veröffentlichungstag der Anmeldung: 11.02.2009
(73) Patentinhaber: Deere & Company, Moline, IL 61265-8098 (US)
(72) Erfinder: Weichholdt, Dirk, 57200, Woelfing les Sarreguemines (DE); Priesnitz, Rico, 66822, Lebach (DE); Lauer, Fritz, 66894, Krähenberg (DE); Klein, Oliver, 66822, Lebach (DE); Dow, Chad A, East Moline, IL 61244 (US); Ferris, Joel David, Davenport, IA 52807 (US)
(74) Vertreter: Holst, Sönke

(56) Entgegenhaltungen:
- DE-B- 1 006 195
- DE-C- 960 683
- SU-A1- 376 054
- US-A- 3 071 246
- US-A- 3 669 123

## Beschreibung

Die Erfindung betrifft eine zwischen Breitverteil- und Auswurfkrümmerbetrieb umschaltbare Erntegutresteabgabeanordnung für einen Mähdrescher mit:
einem in einem Gehäuse angeordneten, tangential fördernden Abgabeförderer für Erntegutreste,
einer Breitverteileinrichtung,
einem Auswurfkrümmer,
und Auswahlmitteln, mit denen die Erntegutreste wahlweise der Breitverteileinrichtung oder dem Auswurfkrümmer zuführbar sind.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden üblicherweise durch einen Kaffstreuer auf dem Feld verteilt oder durch den Strohhäcksler geleitet und auf dem Feld verteilt.

Es ist auch vorgeschlagen worden, die Erntegutreste durch einen Auswurfkrümmer zu leiten, um sie zwecks weiterer Verwertung auf einen Anhänger abgeben zu können. Die US 3 669 123 A beschreibt eine derartige Anordnung, bei der ein in einen sich schräg nach hinten und oben erstreckenden Auswurfkrümmer angebracht wird. Das Gehäuse leitet das Stroh dann auf einen Anhänger oder dergleichen. Soll das Stroh hingegen auf dem Feld verteilt werden, muss das Gehäuse abmontiert und durch eine andere geeignete Verteilvorrichtung ersetzt werden. Dieser Vorgang ist sehr zeitaufwändig.

Die SU 376 054 A beschreibt einen Mähdrescher, bei dem das Stroh stromab der Strohschüttler durch einen mit Gegenmessern zusammenwirkenden Häcksler gehäckselt wird und dann nach unten zu einer Querförderschnecke fällt, die es entweder einem Verteilerkasten mit Verteilerblechen zur Breitverteilung auf einem Feld oder einem Auswurfkrümmer zuführt, um es auf einem Anhänger abzulegen. Die Umschaltung erfolgt durch Verdrehen des gesamten Gehäuses um eine horizontal und quer zur Vorwärtsrichtung verlaufende Achse, was es ermöglicht, einen Auslass des Gehäuses entweder mit dem Auswurfkrümmer oder mit dem Verteilerkasten zu verbinden. Da das ganze Gehäuse verdreht werden muss, ist ein recht großer Aufwand zu treffen.

### Aufgabe der Erfindung

Die der Erfindung zu Grunde liegende Aufgabe wird darin gesehen, eine zwischen Breitverteil- und Auswurfkrümmerbetrieb umschaltbare Erntegutresteabgabeanordnung eingangs genannter Art für einen Mähdrescher bereitzustellen, die auf einfache und zuverlässige Weise eine Umschaltung zwischen beiden Betriebsarten ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntegutresteabgabeanordnung für einen Mähdrescher umfasst einen tangential fördernden Abgabeförderer für Erntegutreste (Stroh und/oder Spreu), der innerhalb eines Gehäuses mit zwei Öffnungen angeordnet ist. Eine erste Öffnung führt zu einer Breitverteileinrichtung, mit der die Erntegutreste näherungsweise über die Breite des Schneidwerks über das Feld verteilt werden können. Eine zweite Öffnung führt zu einem Auswurfkrümmer, mit dem die Erntegutreste auf einen Anhänger oder ein beliebiges Transportfahrzeug überladen werden können. Der ersten Öffnung ist eine erste Klappe zugeordnet, während der zweiten Öffnung eine zweite Klappe zugeordnet ist. Zum Breitverteilbetrieb ist die erste Klappe in eine geöffnete Stellung bringbar, während die zweite Klappe dann in eine geschlossene Stellung verbracht werden kann, um die Erntegutreste ausschließlich der Breitverteileinrichtung zuführen zu können. Beim Auswurfkrümmerbetrieb ist die erste Klappe in eine geschlossene Stellung bringbar, während die zweite Klappe dann in eine geöffnete Stellung verbracht werden kann, um die Erntegutreste ausschließlich dem Auswurfkrümmer zuführen zu können. In den geöffneten bzw. geschlossenen Stellungen können die Klappen verrastet werden. Ihre Bewegung zwischen den geöffneten und geschlossenen Stellungen kann manuell durch einen Bediener oder durch einen fremdkraftbetätigten Aktor, z. B. einen Elektromotor oder Hydraulikzylinder, vom Arbeitsplatz eines Bedieners aus erfolgen.

Auf diese Weise erreicht man eine einfache Umschaltung zwischen dem Auswurfkrümmerbetrieb und dem Breitverteilbetrieb, bei dem vermieden ist, dass Erntegutreste in unerwünschte Öffnungen des Gehäuses gelangen.

Die beiden Klappen können zwischen den geöffneten und geschlossenen Stellungen verschwenkbar sein. Bei einer anderen Ausführungsform können sie aber auch linear oder entlang eines Kreisbogens, der insbesondere an das Gehäuse des Abgabeförderers angepasst ist, verschiebbar sein.

Um im geschlossenen Zustand die Förderung der Erntegutreste durch den Abgabeförderer zu verbessern, bietet es sich an, die beiden Klappen an den Radius des Gehäuses angepasst gekrümmt auszuführen, so dass der Abstand zwischen dem Abgabeförderer und den Klappen dem Abstand zwischen dem Abgabeförderer und seinem Gehäuse entspricht und sich keine den Gutfluss störenden Verengungen oder Erweiterungen zwischen dem Abgabeförderer und den Klappen ergeben, in denen sich Erntegut ansammeln kann.

Die erste Öffnung ist vorzugsweise gegenüber der zweiten Öffnung in Umfangsrichtung des Gehäuses versetzt und unter der zweiten Öffnung angeordnet, so dass die vom - um eine horizontale und quer zur Vorwärtsrichtung des Mähdreschers verlaufende Achse rotierenden - Abgabeförderer abgegebenen Erntegutreste im Breitverteilbetrieb durch die erste Öffnung nach hinten zur Breitverteileinrichtung zugeführt werden können, während sie im Auswurfkrümmerbetrieb nach oben in den Auswurfkrümmer gelangen.

Die beiden Öffnungen erstrecken sich vorzugsweise über die gesamte Breite des Gehäuses, so dass es sich anbietet, dem Auswurfkrümmer ein sich in Flussrichtung verengendes Übergangsgehäuse zu verleihen, an das sich ein um die Hochachse drehbares Abgabeende mit einer um eine horizontale Achse beweglichen, endseitigen Abgabeklappe anschließen kann.

Der Abgabeförderer ist vorzugsweise ein Strohhäcksler mit einem um eine horizontale Achse rotierenden Rotor und um dessen Umfang verteilten Häckselmessern. Es wäre jedoch auch denkbar, als Abgabeförderer ein oder mehrere stromab eines Strohhäckslers angeordnete Gebläse zu verwenden, die um horizontale oder vertikale Achsen rotieren.

Die Breitverteileinrichtung kann eine Anzahl seitlich nebeneinander angeordnete Leitbleche zur transversalen Streuung der Erntegutreste umfassen. Bei einer anderen Ausführungsform können Wurfgebläse mit um horizontale oder vertikale Achsen rotierenden Wurfpaddeln verwendet werden.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einer erfindungsgemäßen, zwischen Breitverteil- und Auswurfkrümmerbetrieb umschaltbaren Erntegutresteabgabeanordnung,
- Fig. 2: eine vergrößerte seitliche Ansicht der Erntegutresteabgabeanordnung aus Figur 1, und
- Fig. 3: eine rückwärtige Ansicht der Erntegutresteabgabeanordnung.

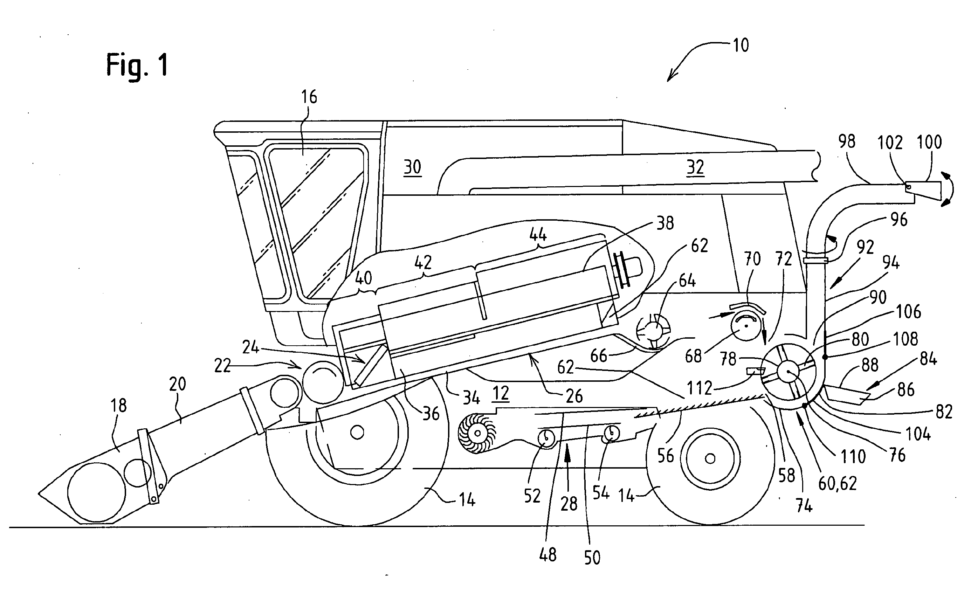

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

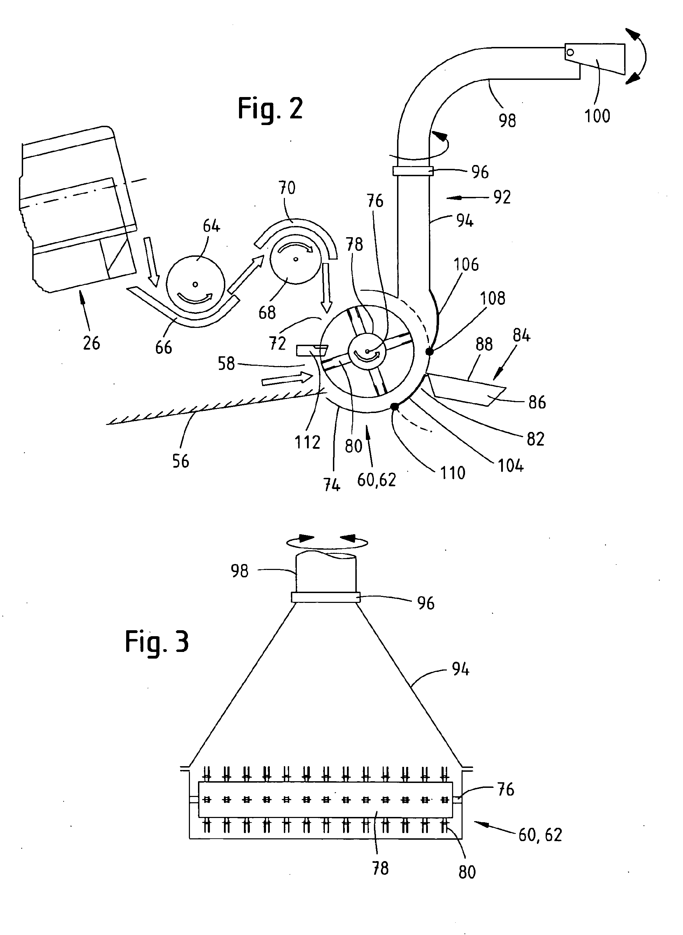

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 kann auch eine tangentiale Dreschtrommel und eine
ihr folgende axiale Trenneinrichtung oder Strohschüttler (wie in der Figur 2 schematisch angedeutet) verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen unteren Einlass 58 eines Abgabeförderers 60 in Form eines Strohhäckslers 62 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 befindet sich ein Trommelförderer 68, der Stroh im Zusammenwirken mit einem oberen Leitboden 70 nach unten in einen oberen Einlass 72 des Strohhäckslers 62 lenkt.

Der Strohhäcksler 62 setzt sich aus einem Gehäuse 74 und einem darin angeordneten, um eine quer zur Vorwärtsrichtung und horizontal verlaufende Achse 76 drehbaren Rotor 78 mit um den Umfang des Rotors 78 verteilten, paarweise pendelnd aufgehängten Häckselmessern 80 zusammen, welche mit gehäusefesten Gegenmessern 112 zusammenwirken. Das Gehäuse 74 weist im unteren, rückwärtigen Bereich eine sich über die Breite des Strohhäckslers 62 erstreckende erste Öffnung 82 auf, hinter der eine Breitverteileinrichtung 84 mit einer Anzahl seitlich nebeneinander angeordneter Leitbleche 86 zur transversalen Streuung und Verteilung der Erntegutreste über die Breite des Schneidwerks 18 auf dem Feldboden folgt, die unterhalb eines Bodenblechs 88 angebracht sind. Außerdem weist das Gehäuse 74 in seinem oberen, rückwärtigen Bereich eine zweite Öffnung 90 auf, oberhalb der ein Auswurfkrümmer 92 folgt. Der Auswurfkrümmer 92 umfasst einen sich direkt an die zweite Öffnung 90 anschließendes Übergangsgehäuse 94, dessen unteres Ende sich über die Breite des Strohhäckslers 62 erstreckt. Das Übergangsgehäuse 94 verengt sich nach oben und endet in einem Drehkranz 96, wie in der Figur 3 dargestellt. Am um die Hochachse drehbaren Drehkranz 96 ist ein Abgabeende 98 mit einer um eine horizontale Achse 102 beweglichen, endseitigen Abgabeklappe 100 angebracht. Die Drehungen des Drehkranzes 96 um die Hochachse und der Abgabeklappe um ihre horizontale Achse 102 erfolgen durch geeignete fremdkraftbetätigte Aktoren (nicht gezeigt), insbesondere Elektromotore oder Hydraulikmotore bzw. -zylinder, von der Bedienerkabine 16 aus gesteuert.

Um die Erntegutreste (Stroh und/oder Spreu) in einem Breitverteilerbetrieb nur der Breitverteileinrichtung 84 und in einem Auswurfkrümmerbetrieb nur dem Auswurfkrümmer 92 zuführen zu können, sind entsprechende Auswahlmittel vorgesehen, die eine der ersten Öffnung 82 zugeordnete, erste Klappe 104 und eine der zweiten Öffnung 90 zugeordnete, zweite Klappe 106 umfassen. Die erste Klappe 104 ist an ihrem (stromauf liegenden) vorderen, unteren Ende um eine horizontale Achse 110 schwenkbar am Gehäuse 74 angelenkt und durch einen fremdkraftbetätigten Aktor (nicht gezeigt) oder manuell durch den Bediener zwischen der gezeigten Position, in der sie die erste Öffnung 82 ohne Versatz gegenüber dem Gehäuse 74 verschließt und einer geöffneten (in den Figuren 1 und 2 gestrichelt eingezeichneten) Position, in der sie nach unten verschwenkt ist und die erste Öffnung 82 freigibt, verschwenkbar. Analog ist die zweite Klappe 106 ist an ihrem (stromauf liegenden) vorderen, unteren Ende um eine horizontale Achse 108 schwenkbar am Gehäuse 74 angelenkt und durch einen fremdkraftbetätigten Aktor (nicht gezeigt) oder manuell durch den Bediener zwischen der gezeigten Position, in der sie die zweite Öffnung 90 freigibt und einer geschlossenen (in den Figuren 1 und 2 gestrichelt eingezeichneten) Position, in der sie nach unten verschwenkt ist und die Öffnung 90 ohne Versatz gegenüber dem Gehäuse 74 schließt, verschwenkbar. Die in den Figuren 1 und 2 mit durchgezogenen Linien eingezeichneten Positionen der Klappen 104, 106 entsprechen dem Auswurfkrümmerbetrieb, in dem die Erntegutreste dem Auswurfkrümmer 92 zugeführt werden, während die dort gestrichelt eingezeichneten Positionen der Klappen 104, 106 dem Breitverteilbetrieb entsprechen, in dem die Erntegutreste der Breitverteileinrichtung 84 zugeführt werden. Die Krümmungen der Klappen 104, 106 entsprechen dem Radius des Gehäuses 74.

## Patentansprüche

1. Zwischen Breitverteil- und Auswurfkrümmerbetrieb umschaltbare Erntegutresteabgabeanordnung für einen Mähdrescher (10) mit:
einem in einem Gehäuse (74) angeordneten, tangential fördernden Abgabeförderer (60) für Emtegutreste,
einer Breitverteileinrichtung (84),
einem Auswurfkrümmer (92),
und Auswahlmitteln, mit denen die Erntegutreste wahlweise der Breitverteileinrichtung (84) oder dem Auswurfkrümmer (92) zuführbar sind,
**dadurch gekennzeichnet, dass** die Breitverteileinrichtung (84) stromab einer ersten Öffnung (82) des Gehäuses (74) des Abgabeförderers (60) angeordnet ist,
dass der Auswurfkrümmer (92) stromab einer zweiten Öffnung (90) des Gehäuses (74) des Abgabeförderers (60) angeordnet ist,
und dass die Auswahlmittel eine der ersten Öffnung (82) zugeordnete erste Klappe (104) und eine der zweiten Öffnung (90) zugeordnete zweite Klappe (106) umfassen
und im Breitverteilbetrieb die erste Klappe (104) geöffnet und die zweite Klappe (106) geschlossen und im Auswurfkrümmerbetrieb die zweite Klappe (106) geöffnet und die erste Klappe (104) geschlossen sind.

2. Erntegutresteabgabeanordnung nach Anspruch 1, **dadurch gekennzeichnet, dass** die erste Klappe (104) und/oder die zweite Klappe (106) verschwenkbar angeordnet sind.

3. Erntegutresteabgabeanordnung nach Anspruch 1 oder 2, **dadurch gekennzeichnet, dass** die erste Klappe (106) und/oder die zweite Klappe (106) an den Radius des Gehäuses (74) angepasst gekrümmt sind.

4. Erntegutresteabgabeanordnung nach einem der Ansprüche 1 bis 3, **dadurch gekennzeichnet, dass** die erste Öffnung (82) und die zweite Öffnung (90) in Umfangsrichtung des Gehäuses (74) versetzt sind, wobei die zweite Öffnung (90) oberhalb der ersten Öffnung (82) liegt.

5. Erntegutresteabgabeanordnung nach einem der Ansprüche 1 bis 4, **dadurch gekennzeichnet, dass** sich die erste Öffnung (82) und die zweite Öffnung (90) jeweils über die ganze Breite des Gehäuses (74) erstrecken.

6. Erntegutresteabgabeanordnung nach einem der Ansprüche 1 bis 5, **dadurch gekennzeichnet, dass** der Auswurfkrümmer (92) ein sich in Flussrichtung verengendes Übergangsgehäuse (94) umfasst.

7. Erntegutresteabgabeanordnung nach einem der Ansprüche 1 bis 6, **dadurch gekennzeichnet, dass** der Auswurfkrümmer (92) ein um die Hochachse drehbares Abgabeende (98) mit einer um eine horizontale Achse (102) beweglichen, endseitigen Abgabeklappe (100) umfasst.

8. Erntegutresteabgabeanordnung nach einem der Ansprüche 1 bis 7, **dadurch gekennzeichnet, dass** der Abgabeförderer (60) ein Strohhäcksler (62) mit einem um eine horizontale Achse (76) rotierenden Rotor (78) und um dessen Umfang verteilten Häckselmessern (80) ist.

9. Erntegutresteabgabeanordnung nach einem der Ansprüche 1 bis 8, **dadurch gekennzeichnet, dass** die Breitverteileinrichtung (84) seitlich nebeneinander angeordnete Leitbleche (86) umfasst.

10. Mähdrescher (10) mit einer Erntegutresteabgabeanordnung nach einem der Ansprüche 1 bis 9.

## Claims

1. Harvested material discharge arrangement which can be switched between wide distribution mode and ejection spout mode, for a combine harvester (10), having:
a discharge conveyor (60), which is arranged in a housing (74) and feeds tangentially, for harvested material residues,
a wide distribution device (84),
an ejection spout (92),
and selection means for which the harvested material residues can optionally be fed to the wide distribution device (84) or the ejection spout (92),
**characterized in that** the wide distribution device (84) is arranged downstream of a first opening (82) in the housing (74) of the discharge conveyor (60),
**in that** the ejection spout (92) is arranged downstream of a second opening (90) in the housing (74) of the discharge conveyor (60),
and **in that** the selection means comprise a first flap (104) assigned to the first opening (82) and a second flap (106) assigned to the second opening (90),
and in the wide distribution mode the first flap (104) is open and the second flap (106) is closed, and in the ejection spout mode the second flap (106) is open and the first flap (104) is closed.

2. Harvested material discharge arrangement according to Claim 1, **characterized in that** the first flap (104) and/or the second flap (106) are pivotably arranged.

3. Harvested material discharge arrangement according to Claim 1 or 2, **characterized in that** the first flap (106) and/or the second flap (106) are curved in a way which is adapted to the radius of the housing (74).

4. Harvested material discharge arrangement according to one of Claims 1 to 3, **characterized in that** the first opening (82) and the second opening (90) are offset in the circumferential direction of the housing (74), wherein the second opening (90) is located above the first opening (82).

5. Harvested material discharge arrangement according to one of Claims 1 to 4, **characterized in that** the first opening (82) and the second opening (90) each extend over the entire width of the housing (74).

6. Harvested material discharge arrangement according to one of Claims 1 to 5, **characterized in that** the ejection spout (92) comprises a junction housing (94) which tapers in the direction of flow.

7. Harvested material discharge arrangement according to one of Claims 1 to 6, **characterized in that** the discharge spout (92) comprises a discharge end (98) which can rotate about the vertical axis and has an end-side discharge flap (100) which can move about a horizontal axis (102).

8. Harvested material discharge arrangement according to one of Claims 1 to 7, **characterized in that** the discharge conveyor (60) is a straw chopper (62) with a rotor (78) which rotates about a horizontal axis (76) and chopper blades (80) which are distributed around the circumference thereof.

9. Harvested material discharge arrangement according to one of Claims 1 to 8, **characterized in that** the wide distribution device (84) comprises baffles (86) arranged one next to the other laterally.

10. Combine harvester (10) having a harvested material discharge arrangement according to one of Claims 1 to 9.

## Revendications

1. Dispositif de dépôt de résidus de moisson commutable entre un fonctionnement de distribution large et un fonctionnement de collecteur éjecteur pour une moissonneuse-batteuse (10), comprenant :
un transporteur de dépôt (60) pour les résidus de moisson disposé dans un boîtier (74), assurant le transport tangentiellement,
un dispositif de distribution large (84),
un collecteur éjecteur (92),
et des moyens de sélection, avec lesquels les résidus de moisson peuvent être acheminés de manière sélective au dispositif de distribution large (84) ou au collecteur éjecteur (92),
**caractérisé en ce que** le dispositif de distribution large (84) est disposé en aval d'une première ouverture (82) du boîtier (74) du transporteur de dépôt (60),
**en ce que** le collecteur éjecteur (92) est disposé en aval d'une deuxième ouverture (90) du boîtier (74) du transporteur de dépôt (60),
et **en ce que** les moyens de sélection comprennent un premier clapet (104) associé à la première ouverture (82) et un deuxième clapet (106) associé à la deuxième ouverture (90),
le premier clapet (104) étant ouvert, et le deuxième clapet (106) étant fermé en fonctionnement de distribution large, et le deuxième clapet (106) étant ouvert et le premier clapet (104) étant fermé en fonctionnement de collecteur éjecteur.

2. Dispositif de dépôt de résidus de moisson selon la revendication 1, **caractérisé en ce que** le premier clapet (104) et/ou le deuxième clapet (106) sont disposés de manière pivotante.

3. Dispositif de dépôt de résidus de moisson selon la revendication 1 ou 2, **caractérisé en ce que** le premier clapet (104) et/ou le deuxième clapet (106) sont courbés de manière adaptée au rayon du boîtier (74).

4. Dispositif de dépôt de résidus de moisson selon l'une quelconque des revendications 1 à 3, **caractérisé en ce que** la première ouverture (82) et la deuxième ouverture (90) sont décalées dans la direction périphérique du boîtier (74), la deuxième ouverture (90) se situant au-dessus de la première ouverture (82).

5. Dispositif de dépôt de résidus de moisson selon l'une quelconque des revendications 1 à 4, **caractérisé en ce que** la première ouverture (82) et la deuxième ouverture (90) s'étendent à chaque fois sur toute la largeur du boîtier (74).

6. Dispositif de dépôt de résidus de moisson selon l'une quelconque des revendications 1 à 5, **caractérisé en ce que** le collecteur éjecteur (92) comprend un boîtier de transition (94) se rétrécissant dans la direction du flux.

7. Dispositif de dépôt de résidus de moisson selon l'une quelconque des revendications 1 à 6, **caractérisé en ce que** le collecteur éjecteur (92) comprend une extrémité de dépôt (98) pouvant tourner autour de l'axe vertical, avec un clapet de dépôt (100) du côté de l'extrémité, déplaçable autour d'un axe horizontal (102).

8. Dispositif de dépôt de résidus de moisson selon l'une quelconque des revendications 1 à 7, **caractérisé en ce que** le transporteur de dépôt (60) est un hache-paille (62) avec un rotor (78) tournant autour d'un axe horizontal (76) et avec des couteaux hache-paille (80) répartis autour de sa périphérie.

9. Dispositif de dépôt de résidus de moisson selon l'une quelconque des revendications 1 à 8, **caractérisé en ce que** le dispositif de distribution large (84) comprend des tôles directrices (86) disposées latéralement l'une à côté de l'autre.

10. Moissonneuse-batteuse (10) comprenant un dispositif de dépôt de résidus de moisson selon l'une quelconque des revendications 1 à 9.
